# EUROPÄISCHE PATENTSCHRIFT

(11) **EP 2 714 439 B1**
(45) Veröffentlichungstag und Bekanntmachung des Hinweises auf die Patenterteilung: **23.03.2016**
(21) Anmeldenummer: 12724079.4
(22) Anmeldetag: 23.05.2012
(51) Int. Cl.: B60G 7/02, B60G 7/00, B60G 13/00, B60G 17/06, F16F 15/03

(54) **RADAUFHÄNGUNG MIT ROTATIONSDÄMPFER**
SUSPENSION SYSTEM WITH A ROTARY DAMPER
SYSTEME DE SUSPENSION AVEC AMORTISSEUR ROTATIF

(30) Priorität: 28.05.2011 DE 102011102743
(43) Veröffentlichungstag der Anmeldung: 09.04.2014
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2012/002188
(87) Internationale Veröffentlichungsnummer: WO 2012/163492

(56) Entgegenhaltungen:
- EP-A1- 1 935 679
- EP-A2- 1 043 516
- WO-A1-2009/107832
- DE-A1- 4 015 777
- DE-A1-102009 051 468
- JP-A- 4 081 311
- JP-A- 2000 120 749

## Beschreibung

Die Erfindung betrifft ein Kraftfahrzeug mit mehreren über Radaufhängungen fahrzeügkarosserieseitig, anbringbaren oder angebrachten Fahrzeugrädern, wobei eine Radaufhängung wenigstens einen ein Fahrzeugrad mit der Fahrzeugkarosserie verbindenden, um eine Achse schwenkbar gelagerten Lenker, und wenigstens einen Rotationsdämpfer mit wenigstens einem Dämpferelement zum Dämpfen der Relativbewegung zwischen einer radaufhängungsseitig angeordneten ersten Masse und einer fahrzeugkarosserieseitig angeordneten zweiten Masse umfasst.

Es ist in vielen Bereichen der Technik erforderlich, Relativbewegungen zwischen zwei Bauteilen eines schwingungsfähigen mechanischen System zu dämpfen. Ein Beispiel ist die Schwingungsdämpfung an einer Kraftfahrzeugkarosserie im Bereich der Radaufhängung. Hierbei ist es z. B. aus DE 602 26 122 T2 bekannt, einen Rotationsdämpfer fahrzeugkarosserieseitig anzuordnet und an einer Radaufhängung eines Kraftfahrzeugs anzubinden.

Die Anbindung entsprechender Rotationsdämpfer an eine Radaufhängung eines Kraftfahrzeugs erfolgt üblicherweise über Gestänge, welche etwa Schiebestangen oder dergleichen umfassen. Folglich müssen zusätzliche Bauteile zur Anbindung des Rotationsdämpfers vorgesehen werden, was insbesondere im Hinblick auf die bekanntermaßen enge Bauraumsituation im Bereich der Radaufhängung sowie im Hinblick auf Gewicht und Kosten der Radaufhängung nachteilhaft ist. Ferner zeigen entsprechende Gestänge ein Eigenschwingungsverhalten, was sich aus deren fahrzeugkarosserie- sowie rotationsdämpferseitiger Lagerung ergibt. Es kann hierbei zu akustisch wahrnehmbaren Schwingungen kommen, welche über entsprechende Schwingungsdämpfer nicht hinreichend bedämpfbar sind.

Exzentrische Anbindungen entsprechender Rotationsdämpfer lassen regelmäßig nur verhältnismäßig kleine, für eine Bewegung eines Rotationsdämpfers nutzbare Winkelbereiche zu. Bei Überschreiten größerer Winkelbereiche kann es zu unstetigen Übersetzungen zwischen Massenbewegung und Dämpferrotation kommen. Zur Realisierung großer Federwege müssen entsprechend lange Gestänge verwendet werden, was, wie bereits erwähnt, in Anbetracht der üblicherweise eingeschränkten Bauraumsituation im Bereich der Radaufhängung problematisch ist.

Aus der DE 40 15 777 A1 ist eine Fahrzeugradaufhängung bekannt, umfassend eine Aufhängungsverbindungseinrichtung, die mit einem Radträger schwenkbeweglich verbunden ist und einen Pendelarm aufweist, der mittels einer Federeinrichtung relativ zur Fahrzeugkarosserie elastisch gelagert ist. Dabei ist im Basisende des Pendelarms ein Rotationsdämpfer vorgesehen, der eine Dämpfungskraft erzeugt, welche einer vertikalen Schwenkbewegung des Pendelarms entgegengesetzt ist. Dazu weist der Rotationsdämpfer einer Fluidkammer auf, in welcher einem Flügel einer drehbar an der Fahrzeugkarosserie gelagerten Mittelwelle eine Dämpfungskraft entgegengesetzt wird.

Die WO 2009/107832 A1 offenbart ein Äufhängungssystem für ein Fahrzeug, umfassend eine Aufhängefeder zwischen einem gefederten und einem ungefederten Teil des Fahrzeugs, einen parallel dazu angeordneten hydraulischen Dämpfer und einen Verschiebüngskrafterzeuger, der mittels eines rotierenden elektromagnetischen Aktuators eine Kraft zwischen dem gefederten und dem ungefederten Teil des Fahrzeugs erzeugt. Dazu ist eine Steuerungseinrichtung vorgesehen, welche den Dämpfer und den Verschiebungskrafterzeuger zur Reduktion von Vibrationen steuert.

Ferner wird in der EP 1 935 679 A1 eine Anordnung zur Aufhängung eines Fahrzeugrades vorgeschlagen, umfassend eine Torsionsfeder und einen Rotationsdämpfer, die miteinander mit dem Chassis verbunden. Dabei weist der Rotationsdämpfer einen Elektromotor zum Dämpfen von Oszillationen in der Anordnung auf, wobei zusätzlich ein Flügelrotationsdämpfer vorgesehen sein kann.

Daneben offenbart die JP 2000 120749 A einen Rotationsdämpfer, umfassend eine fluidgefüllten Druckkammer, in der mittels eines Ausdehnungsventils und eines Kompressionsventils eine Dämpfungskraft erzeugt wird.

Schließlich ist aus der DE 10 2009 051 468 A1 eine Radaufhängung für Kraftfahrzeuge mit einer Drehstabfeder und einem Rotationsdämpfer bekannt, die jeweils koaxial zu einer Schwenkachse eines unteren Querlenkers angeordnet sind. Dabei ist die Drehstabfeder durch den Rotationsdämpfer hindurch trieblich mit dem unteren Querlenker gekoppelt und an diesem eine weitere Drehstabfeder vorgesehen, deren Federvorspannung mittels eines elektromotorisch verstellbaren Rotationsaktuators verstellbar ist.

Der Erfindung liegt das Problem zugrunde, ein Kraftfahrzeug mit einer, insbesondere in Anbetracht der begrenzten Bauraumsituation im Bereich der Radaufhängung, verbesserten Anbindung eines Rotationsdämpfers an einer Radaufhängung anzugeben.

Das Problem wird erfindungsgemäß durch ein Kraftfahrzeug mit den Merkmalen des Patentanspruchs 1 gelöst.

Das erfindungsgemäße Prinzip sieht eine neuartige Anordnung respektive Verbindung eines Rotationsdämpfers an eine Radaufhängung eines Kraftfahrzeugs vor, wonach der Rotationsdämpfer direkt in die Lagerung eines Lenkers, insbesondere eines Querlenkers, der Radaufhängung integriert ist. Dabei werden beim Betrieb des Kraftfahrzeugs auftretende Schwenkbewegungen des Lenkers auf ein mit dem Lenker bewegungsgekoppeltes drehbares Dämpferteil des Dämpferelements übertragen, d. h. der Rotationsdämpfer ist über entsprechende Schwenkbewegungen des Lenkers angetrieben. Entsprechend ist auch die Problematik der durch die Gestänge induzierten Schwingungen bei dem erfindungsgemäßen Prinzip nicht gegeben. Durch die direkte Integration des Rotationsdämpfers in den Lenker entfallen Bauraum einnehmende Bauteile zur Anlenkung des Rotationsdämpfers, d. h. des diesem zugehörigen drehbaren Dämpferteils, wie insbesondere die oben genannten Gestänge, so dass eine besonders platzsparende, kompakte Ausführung einer Radaufhängung gegeben ist.

Der Lenker kann ein- oder mehrteilig ausgeführt sein, das heißt er kann als ein gegebenenfalls mehrere, sich zwischen Fahrzeugrad und Fahrzeugkarosserie erstreckende Streben umfassendes Bauteil oder,aus mehreren einzelnen entsprechenden Streben gebildet sein.

Das erfindungsgemäße Prinzip ist sowohl für Radaufhängungen lenkender Achsen, wie üblicherweise die Vorderachsen, als auch für Radaufhängungen nicht lenkender Achsen, wie üblicherweise die Hinderachsen, eines Kraftfahrzeugs, anwendbar. Es ist bevorzugt, jedoch nicht zwingend erforderlich, in sämtlichen Lenkern der kraftfahrzeugseitig vorgesehenen Radaufhängungen entsprechende Rotationsdämpfer zu integrieren.

Der Rotationsdämpfer ist zweckmäßig innerhalb einer fahrzeugkarosserieseitig angeordneten hohlzylindrischen Lageraufnahme des Lenkers angeordnet, wobei die Lageraufnahme mit dem drehbaren Dämpferteil bewegungsgekoppelt ist. Die Lageraufnahme ist auch als Lagerauge zu bezeichnen und bildet die Schnittstelle zwischen der Radaufhängung und der Fahrzeugkarosserie. Die Lageraufnahme weist einen sich üblicherweise in Fahrzeuglängsachse erstreckenden zylindrischen Hohlraum auf, welcher der Aufnahme respektive Anordnung des Rotationsdämpfers dient. Die Lageraufnahme ist drehfest, d. h. bevorzugt integral mit dem Lenker ausgeführt, so dass entsprechende Schwenkbewegungen des Lenkers zu Drehbewegungen der ortsfest gelagerten Lageraufnahme um ihre Lagerachse führen. Die Drehbewegungen der Lageraufnahme werden durch deren Bewegungskopplung mit dem drehbaren Dämpferteil direkt oder indirekt auf das drehbare Dämpferteil übertragen.

Die Bewegungskopplung zwischen Lageraufnahme und drehbarem Dämpferteil kann über wenigstens ein von der Lageraufnahme ausgehendes, mit dem drehbaren Dämpferteil drehfest verbundenes Verbindungselement gebildet sein. Mithin wird bei einer durch die relative Massenbewegung herbeigeführten Schwenkbewegung des Lenkers, d. h. einer, wie vorstehend beschriebenen, entsprechenden Drehbewegung der Lageraufnahme über das Verbindungselement, welches z. B. die Form eines drehfest mit dem drehbaren Dämpferteil verbundenen Verbindungsrings oder Ringsbunds hat, direkt auf das drehbare Dämpferteil übertragen. Selbstverständlich ist das Verbindungselement auch drehfest mit der Lageraufnahme verbunden. Es handelt sich insgesamt um einen vergleichsweise unkomplizierten konstruktiven Aufbau.

Es ist auch möglich, dass die Bewegungskopplung über wenigstens ein von der Lageraufnahme ausgehendes, mit einem einem Getriebe zugehörigen ersten Getriebeteils bewegungsgekoppeltes Verbindungselement gebildet ist, wobei das erste Getriebeelement über das Verbindungselement in eine Drehbewegung versetzbar und wenigstens ein zweites, mit dem ersten Getriebeelement direkt oder indirekt übersetzt gekoppeltes Getriebeelement mit dem drehbaren Dämpferteil bewegungsgekoppelt ist, derart, dass eine Drehbewegung des drehbaren Dämpferteils erfolgt. Mithin ist in dieser Ausführungsform eine indirekte Übertragung der Drehbewegung der Lageraufnahme auf das drehbare Dämpferteil gegeben, da zwischen Lageraufnahme und drehbarem Dämpferteil ein Getriebe geschaltet ist. Die Zwischenschaltung eines Getriebes erlaubt eine Übersetzung der Bewegung des Verbindungselements der Lageraufnahme, so dass vergleichsweise geringfügige Bewegungen respektive Auslenkungen des Verbindungselements respektive der Lageraufnahme hohe Umdrehungen bzw. Drehgeschwindigkeiten des drehbaren Dämpferteils des Dämpferelements bewirken. Demzufolge kann die Dämpfwirkung des Dämpferelements erhöht werden. Als Verbindungselement kann etwa ein drehfest mit der Lageraufnahme verbundener Verbindungsring oder Ringsbund verwendet werden.

Das Getriebe kann beispielsweise in Form eines Planetengetriebes, Spannungswellengetriebes, Zykloidgetriebes oder Stirnradgetriebes ausgebildet sein. Andere Getriebebauformen sind ebenso denkbar.

Es ist zweckmäßig, wenn zwischen der Lageraufnahme und dem Rotationsdämpfer wenigstens ein, insbesondere aus einem Elastomermaterial gebildetes, Federdämpferelement respektive ein Schwingungsdämpfer angeordnet ist. Das Federdämpferelement kann beispielsweise als hohlzylindrische Elastomerspur ausgebildet sein und dient grundsätzlich als zusätzliche Lagerung des Rotationsdämpfers innerhalb der Lageraufnahme, d. h. es ist etwa durch Vulkanisieren, Verkleben etc. sowohl an den Innendurchmesser der Lageraufnahme als auch an den Außendurchmesser des Dämpferelements angebunden. Das Federdämpferelement dient der Bedämpfung von beim Betrieb des Kraftfahrzeugs und/oder des Rotationsdämpfers entstehenden Schwingungen, wobei insbesondere hochfrequente Anregungen kleiner Amplitude bedämpft werden. Eine gezielte Einstellung des Spektrums an zu bedämpfenden Schwingungen ist über eine geeignete Materialauswahl des das Federdämpferelement bildenden Materials möglich.

Das Dämpferelement umfasst ein hohlzylindrisches Gehäuse, in welchem das drehbare Dämpferteil und ein feststehendes Dämpferteil aufgenommen oder integriert sind, wobei das drehbare Dämpferteil unter Ausbildung einer Dämpfkraft relativ zu dem feststehenden Dämpferteil drehbar gelagert ist. Das Gehäuse ist insbesondere über wenigstens einen mit entsprechenden Befestigungsabschnitten versehenen Gehäuseabschnitt lösbar oder unlösbar mit der Fahrzeugkarosserie verbunden. Dabei handelt es sich beispielsweise um eine drehfeste Anbindung des Gehäuses an die Fahrzeugkarosserie bzw. einen dieser zugeordneten Hilfsrahmen oder dergleichen.

Dabei ist es vorgesehen, dass das feststehende und das drehbare Dämpferteil je als hohlzylindrischer Körper ausgebildet sind, wobei entweder das feststehende Dämpferteil innerhalb des drehbaren Dämpferteils oder das drehbare Dämpferteil innerhalb des feststehenden Dämpferteils aufgenommen ist. Die Anordnung ist jedenfalls derart, dass das drehbare, mit dem Verbindungselement der Lageraufnahme direkt oder indirekt bewegungsgekoppelte Dämpferteil relativ zu dem feststehenden lagefest angeordneten Dämpferteil drehbar ist. Das feststehende oder das drehbare Dämpferteil kann entsprechend als Teil des oder integriert in das Gehäuse des Dämpferelements ausgebildet sein, so dass im Falle des einen Teil des Gehäuses des Dämpferelements drehbaren Dämpferteils das Gehäuse entsprechend drehbar gelagert ist. Hierbei ist selbstverständlich eine entsprechende drehfeste Anbindung des feststehenden Dämpferteils des Dämpferelements an die Fahrzeugkarosserie gegeben.

Der Rotationsdämpfer ist bevorzugt als elektrischer Rotationsdämpfer mit wenigstens einem elektrischen Dämpferelement ausgebildet. Demzufolge kann durch das Dämpferelement eine Umwandlung von mechanischer in elektrische Energie erfolgen. In dieser Ausgestaltung umfasst der Rotationsdämpfer einen durch die Massenbewegung angetriebenen Generator mit einem feststehenden Stator (feststehendes Dämpferteil) und einen relativ dazu drehbaren Rotor (drehbares Dämpferteil) sowie vorteilhaft ein mit dem Generator gekoppeltes Getriebe. Das Funktionsbetrieb des elektrischen Dämpfers beruht dann entsprechend auf der Kopplung des Generators mit dem Getriebe, wobei das Antriebselement des Getriebes eine über das direkt mit dem Antriebselement des Getriebes gekoppelte Verbindungselements der Lageraufnahme eingebrachte Drehbewegung auf den Rotor überträgt. Die in den Rotor eingeleitete Rotationsbewegung bedingt die Dämpfung über den Generator sowie die Rückgewinnung bzw. Umwandlung der ursprünglich aus der Massenbewegung resultierenden mechanischen Dämpfungsenergie in den generatorseitig erzeugten Strom.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Radaufhängung eines Kraftfahrzeugs gemäß einer beispielhaften Ausführungsform der Erfindung;
- Fig. 2: eine alternative Ansicht der in Fig. 1 gezeigten Radaufhängung; und
- Fig. 3: eine Schnittansicht entlang der Linie III - III in Fig. 2.

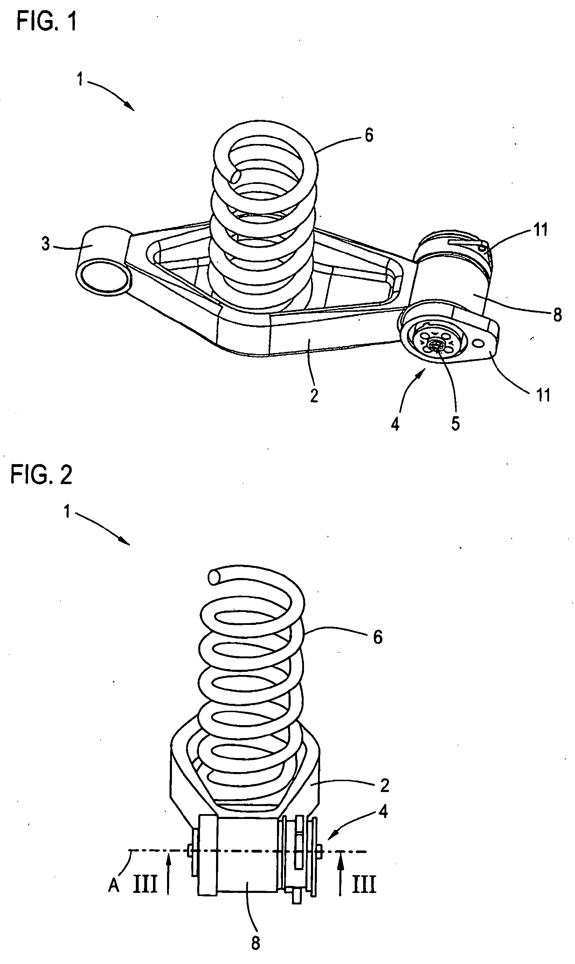

Fig. 1 zeigt eine Prinzipdarstellung einer Radaufhängung 1 eines Kraftfahrzeugs (nicht gezeigt) gemäß einer beispielhaften Ausführungsform der Erfindung. Fig. 2 zeigt eine alternative Ansicht der in Fig. 1 gezeigten Radaufhängung 1. Die Radaufhängung 1 dient in bekannter Weise der Anbindung eines Fahrzeugrades (nicht gezeigt) an eine Fahrzeugkarosserie (nicht gezeigt). Mithin umfasst das Kraftfahrzeug in der Regel vier entsprechende, den jeweiligen Fahrzeugrädern zugeordnete Radaufhängungen 1.

Die Radaufhängung 1 umfasst einen um eine Schwenkachse schwenkbar gelagerten Lenker 2. Dieser ist vorliegend als Querlenker ausgebildet, d. h., er verläuft im Wesentlich quer zur Fahrzeuglängsachse. An dem Lenker 2 ist links, d. h. an der der Fahrzeugkarosserie abgewandten bzw. einem Fahrzeugrad zugewandten Seite eine Lageraufnahme 3 zur Anbindung eines Fahrzeugrads vorgesehen.

In die Radaufhängung 1 ist ein Rotationsdämpfer 4 integriert, welcher ein Dämpferelement 5 aufweist, welches der Dämpfung der Relativbewegung zwischen einer radaufhängungsseitig angeordneten ersten Masse in Form des jeweiligen Fahrzeugrads und einer zweiten Masse in Form der Fahrzeugkarosserie dient. In der in Fig. 1 gezeigten Ausführungsform ist am Lenker 2 zusätzlich eine Aufbaufeder 6 angeordnet, welche jedoch kein zwingender Bestandteil der Radaufhängung 1 sein muss.

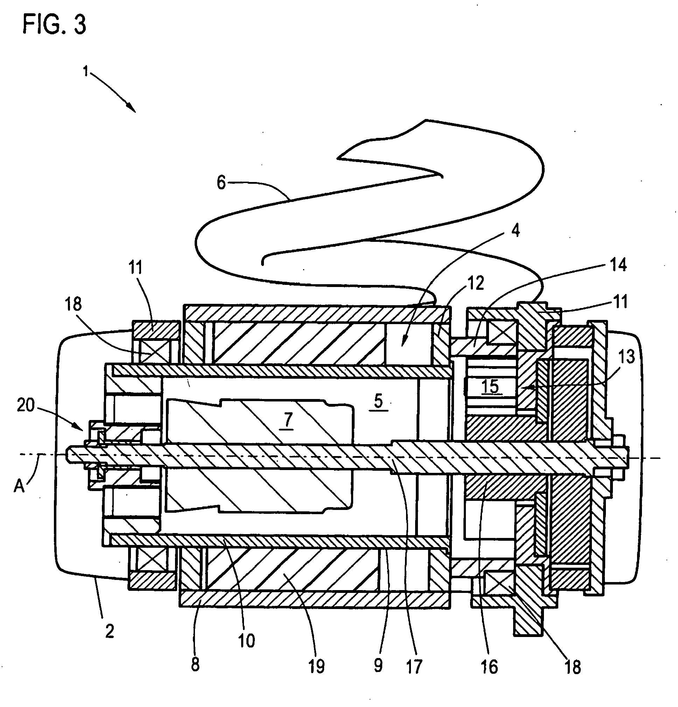

Ersichtlich ist der Rotationsdämpfer 4 direkt in eine fahrzeugkarosserieseitige hohlzylindrische Lageraufnahme 8 bzw. ein Lagerauge des Lenkers 2 integriert. Entsprechend werden durch die Massenbewegung herbeigeführte Schwenkbewegungen des Lenkers 2 auf ein mit diesem bewegungsgekoppeltes drehbares Dämpferteil 7 (vgl. insbesondere Fig. 3) des Dämpferelements 5 übertragen. Die Lageraufnahme 8 ist entsprechend mit dem drehbaren Dämpferteil 7 bewegungsgekoppelt, d. h. beim Verschwenken des Lenkers 2 herbeigeführte Drehbewegungen der Lageraufnahme 8 um ihre Lageraufnahmenachse A werden auf das drehbare Dämpferteil 7 übertragen und derart eine Dämpfwirkung des Dämpferelements 5 herbeigeführt.

Die Form des Rotationsdämpfers 4 respektive des Dämpferelementes 5 ist der Form der Lageraufnahme 8 nachempfunden, so dass der Rotationsdämpfer 4 einfach innerhalb der Lageraufnahme 8 anordbar ist. Entsprechend weist das Dämpferelement 5 ein hohlzylindrisches Gehäuse 9 auf, in welchem das drehbare Dämpferteil 7 und ein feststehendes Dämpferteil 10 aufgenommen bzw. integriert sind. Das drehbare Dämpferteil 7 ist dabei unter Ausbildung einer Dämpfkraft relativ zu dem feststehenden Dämpferteil 10 drehbar gelagert. Das Gehäuse 9 ist selbst jedoch nicht drehbar gelagert, sondern über Verbindungselemente 11 drehfest an die Fahrzeugkarosserie angebunden.

Fig. 3 zeigt eine Schnittansicht entlang der Linie III - III in Fig. 2. Die Anordnung des Rotationsdämpfers 4 respektive des Dämpferelements 5 innerhalb der fahrzeugkarosserieseitigen Lageraufnahme 8 ist hierbei zu erkennen. Ersichtlich ist das Gehäuse 9 des Dämpferelements 5 direkt innerhalb der Lageraufnahme 8 aufgenommen ist.

Das drehbare Dämpferteil 7 ist hier indirekt mit einem drehfest mit der Lageraufnahme 8 verbundenen Verbindungsmittel 12 in Form eines Ringbunds angebunden bzw. bewegungsgekoppelt. Die Anlenkung des drehbaren Dämpferteil 7 erfolgt also nicht direkt, da zwischen dem Verbindungsmittel 12 und dem drehbaren Dämpferteil 7 ein Getriebe 13 geschaltet ist. Das Getriebe 13 ist in dieser Ausführungsform als Planetengetriebe ausgebildet und dient der Übersetzung entsprechender Drehbewegungen der Lageraufnahme 8, so dass diese entsprechend mit höheren Drehgeschwindigkeiten auf das drehbare Dämpferteil 7 übertragbar sind, was die Dämpfwirkung des Dämpferelements 5 erheblich verbessert.

Das Verbindungsmittel 12 der Lageraufnahme 8 ist axial an ein Hohlrad 14 des Getriebes 13 angebunden, d. h. drehfest mit diesem verbunden. Das Hohlrad 14 kämmt in bekannter Weise mit einer Anzahl an Planetenrädern 15, welche wiederum mit einem angeordneten Sonnenrad 16 kämmen. Das Sonnenrad 16 ist drehfest mit einem Axialzapfen 17 verbunden, welcher sich in axialer Richtung entlang der Lageraufnahmenachse A durch die Lageraufnahme 8 erstreckt. Ersichtlich ist das drehbare Dämpferteil 7 auf dem Axialzapfen 17 angeordnet. Die Anordnung ist drehfest, so dass sich Drehbewegungen bzw. Drehmomente des Axialzapfens 17 entsprechend auf das drehbare Dämpferteil 7 übertragen. Das feststehende Dämpferteil 10 ist hier in das Gehäuse 9 des Dämpferelements 5 integriert.

In Fig. 3 ist ferner die drehfeste Lagerung des Gehäuses 9 des Dämpferelements 5 zu sehen, welche über entsprechende Lagerelemente 18 erfolgt. Überdies ist ein aus einem Elastomermaterial gebildetes ringförmiges Federdämpferelement. 19 zu erkennen, welches zwischen der Lageraufnahme 8 und dem Gehäuse 9 des Dämpferelements 5 angeordnet und sowohl etwa durch Vulkanisieren an die Lageraufnahme 8 als auch an das Gehäuse 9 angebunden ist. Das Federdämpferelement 19 dient grundsätzlich als zusätzliche Lagerung des Rotationsdämpfers 3 innerhalb der Lageraufnahme 8. Das Federdämpferelement 19 erlaubt zudem eine Bedämpfung von beim Betrieb des Kraftfahrzeugs und/oder des Rotationsdämpfers 1 entstehenden Schwingungen, wobei insbesondere hochfrequente Anregungen kleiner Amplitude bedämpft werden. Das Federdämpferelement 19 kann auch als sogenannte Elastomerspur bezeichnet werden.

Es ist bevorzugt, dass der Rotationsdämpfer 4 als elektrischer Rotationsdämpfer ausgebildet ist, d. h., das Dämpferelement 5 ist als elektrische Maschine respektive Generator ausgebildet, wobei das drehbare Dämpferteil 7 als Rotor und das feststehende Dämpferteil 10 als Stator ausgebildet ist.

Mithin kann durch die Relativbewegung des drehbaren Dämpferteils 7 in Form des Rotors relativ zu dem feststehenden Dämpferteil 10 in Form des Stators die bei einem Einfedern der mit dem Rotationsdämpfer 4 ausgestatteten Radaufhängung 1 respektive des Lenkers 2 entstehende mechanische Energie rückgewonnen bzw. in elektrische Energie umgewandelt werden, welche elektrische Energie beispielsweise über geeignete statorseitige Anschlussmittel 20 in ein Bordnetz des Kraftfahrzeugs eingespeist werden kann. Hierfür umfasst das drehbare Dämpferteil 7, d. h. der Rotor beispielsweise entsprechende Permanentmagnete, wohingegen das feststehende Dämpferteil 10, d. h. der Stator nicht gezeigte Wicklungen umfasst. Die Anschlussmittel 20 können in Form eines oder als Teil eines den Axialzapfen 17 gehäusestirnwandseitig lagernden Kommutatorgehäuses ausgebildet sein.

Die Rückgewinnung bzw. Umwandlung der mechanischen Energie beruht auf dem Prinzip der magnetischen Induktion, d. h. in Wechselwirkung mit einem Erregermagnetfeld wird durch magnetische Induktion ein Moment entgegengesetzt der Rotation des drehbaren Dämpferteil 7 erzeugt, welches die Dämpfkraft des elektrischen Dämpferelements 5 darstellt.

Gleichermaßen wäre auch eine Stromerzeugung seitens des drehbaren Dämpferteils 7 in Form des Rotors denkbar, wenn dieses anstelle des feststehenden Dämpferteils 10 entsprechende Wicklungen aufweisen würde. Über eine gezielte Bestromung des als Generator dienenden Dämpferelements 5 lassen sich dessen Dämpfungseigenschaften einstellen.

Das erfindungsgemäße Prinzip erlaubt eine besonders kompakte Anbindung bzw. Integration eines Rotationsdämpfers 4 in eine Radaufhängung 1, da der Rotationsdämpfer 4 direkt in einen entsprechenden Lenker 2 einer Fahrzeugachse integriert ist. Übliche Dämpferelemente wie Teleskopdämpfer oder dergleichen sind nicht notwendig. Der insgesamt sehr kompakte Aufbau der erfindungsgemäßen Radaufhängung 1 wirkt sich beispielsweise positiv auf die Durchladebreite respektive den Fußgängerschutz des erfindungsgemäßen Kraftfahrzeugs aus.

## Patentansprüche

1. Kraftfahrzeug mit mehreren über Radaufhängungen (1) fahrzeugkarosserieseitig anbringbaren oder angebrachten Fahrzeugrädern, wobei eine Radaufhängung (1) wenigstens einen ein Fahrzeugrad mit einer Fahrzeugkarosserie verbindenden, um eine Achse (A) schwenkbar gelagerten Lenker (2), und wenigstens einen Rotationsdämpfer (4) mit wenigstens einem Dämpferelement (5) zum Dämpfen der Relativbewegung zwischen einer radaufhängungsseitig angeordneten ersten Masse und einer fahrzeugkarosserieseitig angeordneten zweiten Masse umfasst, wobei der Rotationsdämpfer (4) direkt in die Lagerung des Lenkers (2) integriert ist, wobei durch die Massenbewegung herbeigeführte Schwenkbewegungen des Lenkers (2) auf ein mit diesem bewegungsgekoppeltes drehbares Dämpferteil (7) des Dämpferelements (5) übertragbar sind, wobei das Dämpferelement (5) ein hohlzylindrisches Gehäuse (9) umfasst, in welchem das drehbare Dämpferteil (7) und ein feststehendes Dämpferteil (10) aufgenommen oder integriert sind, wobei das drehbare Dämpferteil (7) unter Ausbildung einer Dämpfkraft relativ zu dem feststehenden Dämpferteil (10) drehbar gelagert ist,
**dadurch gekennzeichnet,**
**dass** das drehbare Dämpferteil (7) und das feststehende Dämpferteil (10) je als hohlzylindrische Körper ausgebildet sind, wobei entweder das drehbare Dämpferteil (7) innerhalb des feststehenden Dämpfer-, teils (10) oder das feststehende Dämpferteil (10) innerhalb des drehbaren Dämpferteils (7) aufgenommen ist.

2. Kraftfahrzeug nach Anspruch 1,
dadurch gekenntzeichnet,
dass der Rotationsdämpfer (4) innerhalb einer fahrzeugkarosserieseitig angeordneten hohlzylindrischen Lageraufnahme (8) des Lenkers (2) angeordnet ist, wobei die Lageraufnahme (8) mit dem drehbaren Dämpferteil (7) bewegungsgekoppelt ist.

3. Kraftfahrzeug nach Anspruch 2,
**dadurch gekennzeichnet,**
**dass** die Bewegungskopplung über wenigstens ein von der Lageraufnahme (8) ausgehendes, mit dem drehbaren Dämpferteil (7) drehfest verbundenes Verbindungselement gebildet ist.

4. Kraftfahrzeug nach Anspruch 2,
**dadurch gekennzeichnet,**
**dass** die Bewegungskopplung über wenigstens ein von der Lageraufnahme (8) ausgehendes, mit einem einem Getriebe (13) zugehörigen ersten Getriebeteil bewegungsgekoppeltes Verbindungselement (12) gebildet ist, wobei das erste Getriebeelement über das Verbindungselement (12) in eine Drehbewegung versetzbar und wenigstens ein zweites, mit dem ersten Getriebeelement direkt oder indirekt übersetzt gekoppeltes Getriebeelement mit dem drehbaren Dämpferteil (7) bewegungsgekoppelt ist, derart dass eine Drehbewegung des drehbaren Dämpferteils (7) erfolgt.

5. Kraftfahrzeug nach Anspruch 4,
**dadurch gekennzeichnet,**
**dass** das Getriebe (13) als Planetengetriebe, Spannungswellengetriebe, Zykloidgetriebe oder Stirnradgetriebe ausgebildet ist.

6. Kraftfahrzeug nach einem der Ansprüche 2 bis 5,
**dadurch gekennzeichnet,**
**dass** zwischen der Lageraufnahme (8) und dem Rotationsdämpfer (4) wenigstens ein, insbesondere aus einem Elastomermaterial gebildetes, Federdämpferelement (19) angeordnet ist.

7. Kraftfahrzeug nach einem der vorangehenden Ansprüche,
**dadurch gekennzeichnet,**
**dass** das Gehäuse (9) drehfest an die Fahrzeugkarosserie angebunden ist.

8. Kraftfahrzeug nach einem der vorangehenden Ansprüche,
**dadurch gekennzeichnet,**
**dass** der Rotationsdämpfer (4) als elektrischer Rotationsdämpfer mit wenigstens einem elektrischen Dämpferelement (5) ausgebildet ist.

## Claims

1. Motor vehicle comprising a plurality of vehicle wheels which can be or are mounted by means of wheel suspensions (1) on the vehicle body side, wherein a wheel suspension (1) comprises at least one suspension arm (2) that connects a vehicle wheel to a vehicle body and is supported so as to be pivotable about an axis (A), and at least one rotation damper (4) having at least one damper element (5) for damping relative movement between a first mass arranged on the wheel suspension side and a second mass arranged on the vehicle body side, the rotation damper (4) being integrated directly in the seat of the suspension arm (2), wherein pivoting movements of the suspension arm (2) induced by the mass movement may be transmitted to a rotatable damper part (7) of the damper element (5) that is motion-coupled to said suspension arm (2), the damper element (5) comprising a hollow cylindrical housing (9) in which the rotatable damper part (7) and a fixed damper part (10) are accommodated or integrated, the rotatable damper part (7) being mounted to be rotatable relative to the fixed damper part (10), producing a damping force,
**characterised in that**
the rotatable damper bar (7) and the fixed damper part (10) are each embodied as hollow-cylindrical bodies, with either the rotatable damper part (7) being accommodated inside the fixed damper part (10) or the fixed damper part (10) being accommodated inside the rotatable damper part (7).

2. Motor vehicle according to claim 1,
**characterised in that**
the rotation damper (4) is arranged inside a hollow-cylindrical bearing seat (8) of the suspension arm (2) on the vehicle body side, wherein the bearing seat (8) is motion-coupled to the rotatable damper part (7).

3. Motor vehicle according to 2,
**characterised in that**
the motion coupling is formed by means of at least one connecting element that originates from the bearing seat (8) and is connected for rotation with the rotatable damper part (7).

4. Motor vehicle according to claim 2,
**characterised in that**
the motion coupling is formed by means of at least one connecting element (12) that originates from the bearing seat (8) and is motion-coupled to a first gear element associated with a gear (13), the first gear element being configured to be set in rotation by the connecting element (12), and at least one second gear element coupled directly or indirectly to the first gear element with a gear ratio is motion-coupled to the rotatable damper part (7), thereby causing the rotatable damper part (7) to rotate.

5. Motor vehicle according to claim 4,
**characterised in that**
the gear (13) is embodied as a planetary gear, a strain wave gear, a cycloid gear or a spur gear.

6. Motor vehicle according to one of claims 2 to 5,
**characterised in that**
at least one spring damper element (19), particularly made from an elastomeric material, is arranged between the bearing seat (8) and the rotation damper (4).

7. Motor vehicle according to one of the preceding claims,
**characterised in that**
the housing (9) is connected to the vehicle body in a rotatably fixed manner.

8. Motor vehicle according to one of the preceding claims,
**characterised in that**
the rotation damper (4) is constructed as an electrical rotation damper having at least one electrical damper element (5).

## Revendications

1. Véhicule automobile avec plusieurs roues de véhicule montées ou pouvant être montées par l'intermédiaire de suspensions de roues (1) du côté de la carrosserie de véhicule, une suspension de roue (1) comprenant au moins un bras (2) qui relie une roue de véhicule à une carrosserie de véhicule et qui est monté pivotant autour d'un axe (A) et au moins un amortisseur rotatif (4) avec au moins un élément amortisseur (5) pour amortir le mouvement relatif entre une première masse agencée du côté de la suspension de roue et une deuxième masse agencée du côté de la carrosserie de véhicule, l'amortisseur rotatif (4) étant intégré directement dans le logement du bras (2), des mouvements de pivotement du bras (2) dus au déplacement de masse pouvant être transmis à une pièce d'amortissement (7), rotative et couplée audit bras quant au mouvement, de l'élément amortisseur (5), l'élément amortisseur (5) comprenant un carter cylindrique creux (9) dans lequel la pièce d'amortissement rotative (7) et une pièce d'amortissement fixe (10) sont logées ou intégrées, la pièce d'amortissement rotative (7) étant montée rotative par rapport à la pièce d'amortissement fixe (10) en formant une force d'amortissement,
**caractérisé en ce que** la pièce d'amortissement rotative (7) et la pièce d'amortissement fixe (10) sont conçues comme des corps cylindriques creux de sorte que soit la pièce d'amortissement rotative (7) est logée à l'intérieur de la pièce d'amortissement fixe (10) soit la pièce d'amortissement fixe (10) est logée à l'intérieur de la pièce d'amortissement rotative (7).

2. Véhicule automobile selon la revendication 1, **caractérisé en ce que** l'amortisseur rotatif (4) est agencé à l'intérieur d'un support de palier cylindrique creux (8), agencé du côté de la carrosserie de véhicule, du bras (2), le support de palier (8) étant couplé quant à son mouvement à la pièce d'amortissement rotative (7).

3. Véhicule automobile selon la revendication 2, **caractérisé en ce que** le couplage au niveau du mouvement est formé par l'intermédiaire d'au moins un élément de liaison qui part du support de palier (8) et qui est relié à la pièce d'amortissement rotative (7) de manière solidaire en rotation.

4. Véhicule automobile selon la revendication 2, **caractérisé en ce que** le couplage au niveau du mouvement est formé par l'intermédiaire d'au moins un élément de liaison (12) qui part du support de palier (8) et qui est couplé quant à son mouvement à une première pièce de transmission appartenant à une transmission (13), le premier élément de transmission pouvant être mis en rotation par l'intermédiaire de l'élément de liaison (12) et au moins un deuxième élément de transmission couplé de façon démultipliée directement ou indirectement au premier élément de transmission étant couplé quant à son mouvement avec la pièce d'amortissement rotative (7) de telle sorte qu'un mouvement rotatif de la pièce d'amortissement rotative (7) s'effectue.

5. Véhicule automobile selon la revendication 4, **caractérisé en ce que** la transmission (13) est conçue comme un engrenage planétaire, comme un engrenage à onde de déformation, comme un engrenage cycloïdal ou comme un engrenage droit.

6. Véhicule automobile selon l'une des revendications 2 à 5, **caractérisé en ce qu'**au moins un élément amortisseur à ressort (19), formé notamment en un élastomère, est agencé entre le support de palier (8) et l'amortisseur rotatif (4).

7. Véhicule automobile selon l'une des revendications précédentes, **caractérisé en ce que** le carter (9) est attaché, solidaire en rotation, à la carrosserie de véhicule.

8. Véhicule automobile selon l'une des revendications précédentes, **caractérisé en ce que** l'amortisseur rotatif (4) est conçu comme un amortisseur rotatif électrique avec au moins un élément amortisseur (5) électrique.
